Europäisches Patentamt

**European Patent Office**

**Office européen des brevets**

(11) Numéro de publication: **0 341 097 B1**

(12) **FASCICULE DE BREVET EUROPEEN**

(45) Date de publication de fascicule du brevet: **03.11.93**  (51) Int. Cl.5: **G06F 7/50**

(21) Numéro de dépôt: **89400604.8**

(22) Date de dépôt: **03.03.89**

(54) **Additionneur de type récursif pour calculer la somme de deux opérandes.**

(30) Priorité: **07.03.88 FR 8802867**

(43) Date de publication de la demande:
**08.11.89 Bulletin 89/45**

(45) Mention de la délivrance du brevet:
**03.11.93 Bulletin 93/44**

(84) Etats contractants désignés:
**DE GB IT NL SE**

(56) Documents cités:
**EP-A- 0 171 805**

**IEEE 1983 PROCEEDINGS OF THE 6TH SYM-POSIUM ON COMPUTER ARITHMETIC, Aarhus, 20-22 June 1983, pages 10-16, IEEE Computer Society, New York, US; S. ONG et al.: "A comparison of alu structures for VLSI technology"**

**L'ONDE ELECTRIOUE, vol. 61, no. 1, janvier 1981, pages 57-64, Paris, FR; J.P. VABRE: "La retenue anticipée dans les circuits d'addition"**

(73) Titulaire: **FRANCE TELECOM**
**6, Place d'Alleray**
**F-75015 Paris(FR)**

(72) Inventeur: **Jutand, Francis**
**167 rue Etienne Dolet**
**F-94230 Cachan(FR)**
Inventeur: **Montperrus, Luc**
**54 rue Dunois**
**F-75013 Paris(FR)**

(74) Mandataire: **Mongrédien, André et al**
**c/o SOCIETE DE PROTECTION DES INVEN-TIONS**
**25, rue de Ponthieu**
**F-75008 Paris (FR)**

Rank Xerox (UK) Business Services
(3.10/3.6/3.3.1)

## Description

La présente invention concerne un additionneur de type récursif pour calculer la somme de deux opérandes.

Cette invention s'applique au calcul de la somme de deux nombres de données binaires grâce à des additionneurs constitués sous forme de circuits intégrés, notamment pour les systèmes de traitement de l'information dans lesquels ces additionneurs constituent l'un des opérateurs fondamentaux de traitement du signal.

L'invention se classe dans la catégorie des additionneurs de type parallèle-parallèle. Ils permettent d'additionner deux opérandes A et B constituées respectivement de données binaires $a_1$, $a_2$, ..., $a_n$ et $b_1$, $b_2$, ..., $b_n$. Le résultat est fourni sous forme binaire parallèle.

Généralement, un additionneur parallèle-parallèle est constitué par une association complexe de séries d'additionneurs élémentaires connectés entre eux. Chaque additionneur élémentaire reçoit deux bits à additionner qui appartiennent à chacun des opérandes ou à des résultats intermédiaires effectués par d'autres additionneurs élémentaires du circuit complexe. Chaque additionneur fournit sur une sortie le résultat binaire d'une addition mais peut également fournir, sur deux autres sorties, deux bits dits respectivement de propagation et de génération.

Le bit de propagation $P_k$ fourni par un additionneur $AD_k$, de rang k (full adder), dans une rangée comportant K additionneurs reliés en série (1≤k≤K), obéit à la relation $P_k = p_k.p_{k-1}...p_1$ avec $p_k = a_k \oplus b_k$. $\oplus$ désigne de façon connue l'opérateur OU exclusif.

$a_k$ et $b_k$ désignent respectivement les bits d'entrée de rang k, à additionner.

Si l'on désigne par addition locale, la sommation effectuée par chaque additionneur élémentaire $AD_k$ d'une rangée, il s'agit d'additionner deux bits $a_k$ et $b_k$ appartenant aux deux opérandes A et B. Trois cas peuvent se présenter :

1) si $a_k = b_k = 0$ aucune retenue n'est générée par l'additionneur élémentaire et si une retenue vient des additionneurs de rang inférieur à k qui effectuent des additions de bits de poids plus faible, cette retenue est alors "piégée" par l'additionneur $AD_k$. Alors, le bit sk de poids $2^k$ de la somme est un 1 logique ;

2) si $a_k = 0$ et $b_k = 1$ ou $a_k = 1$ et $b_k = 0$, alors aucune retenue n'est générée localement, mais une retenue venant des poids faibles est propagée vers l'additionneur de rang k+1, et $s_k = 0$. Sinon $s_k$ reste égal à 1 ;

3) si $a_k = b_k = 1$, une retenue est générée localement par l'additionneur $AD_k$ et cette retenue est transmise vers l'additionneur de rang k+1 supérieur.

De la même manière, la fonction logique de génération $g_k$, pour l'additionneur $AD_k$ de rang k obéit à la relation :

$$g_k = a_k.b_k$$

Cette relation de multiplication logique correspond à la fonction logique ET.

La fonction génération $G_k$ d'un additionneur $AD_k$ correspond à un bit de sortie de cet additionneur, égal à 1, à chaque fois qu'une retenue apparaît lors de l'addition. La fonction de propagation $P_k$ correspond à un bit de sortie de cet additionneur, égal à 1, quand une retenue provenant d'un additionneur du rang précédent (k-1), doit être propagée à l'additionneur de rang suivant (k + 1).

Dans ces conditions, la relation de base relative à la retenue rk calculée par un additionneur parallèle rapide de rang k, s'écrit :

$$r_k = g_k + (P_k.r_{k-1})$$

Dans cette relation le signe + désigne l'opération logique OU INCLUSIF.
$r_k$ est la retenue produite par l'addition des k premiers bits des deux opérandes. Cette relation est valable quel que soit k.

Le calcul final de la somme $S_k$ est effectué par un simple opérateur OU EXCLUSIF :

$$S_k = P_k \oplus r_{k-1}$$

Dans une série de k additionneurs, on désignera par r1IN la retenue entrante appliquée au premier additionneur de la série, et par rKOUT la retenue sortante du dernier additionneur de la série.

Des additionneurs parallèles, fonctionnant sur ce principe et qui utilisent des séries d'additionneurs élémentaires de type "additionneur complet" ("full adder") sont décrits par exemple dans les revues suivantes :
- la revue IEEE TRANSACTIONS ON COMPUTERS - volume C31 - n°3 - Mars 1982 - pages 260 à 264 - dans un article intitulé "Regular lay out for parallel adders" ;
- la revue IEEE - 1983 - pages 10 à 16 - dans un article intitulé "Comparison of ALU structures for VLSI technology" ;
- le livre intitulé "Circuits logiques de traitement numérique de l'information" - édition CEPADUES - ECOLE NATIONALE SUPERIEURE DE L'AERONAUTIQUE ET DE L'ESPACE - 1979 - pages 185 à 289.

Dans ces revues sont décrits des circuits complexes d'additionneurs élémentaires permettant d'effectuer une somme de deux opérandes binaires.

Le problème essentiel posé par les additionneurs complexes constitués de "full adders" provient essentiellement du fait que des retenues sont générées par certains des additionneurs et que certaines retenues doivent être propagées. En effet, toute génération ou la propagation d'une retenue nécessite des connexions complexes et des circuits supplémentaires ; dans la réalisation d'un additionneur sous forme de circuit intégré, ces connexions et ces circuits supplémentaires affectent non seulement la surface du circuit intégré mais aussi ses performances.

Parmi les additionneurs rapides de type parallèle, l'un des plus utilisés est l'additionneur à "sélection de retenue" ("carry select adder" en anglais).

Dans ce type d'additionneur qui est constitué par au moins une série d'additionneurs élémentaires complets (full adders) on effectue deux calculs de retenue en parallèle. Le premier calcul est effectué avec l'hypothèse d'une retenue entrante égale à 1, tandis que le second calcul est effectué avec l'hypothèse d'une retenue entrante égale à zéro. On évite ainsi, lors d'une addition, l'obligation de connaître préalablement la retenue provenant des bits précédents pour pouvoir effectuer l'addition des bits suivants. Lorsque la retenue est effectivement connue, dans le temps nécessaire aux calculs d'addition effectués dans chacune des hypothèses, on sélectionne le résultat correspondant à la bonne hypothèse.

Ce type d'additionneur, s'il a pour inconvénient de doubler une partie du matériel, puisqu'on en effectue deux calculs en parallèle avec des hypothèses différentes, a pour avantage d'augmenter la vitesse de calcul. En effet, lorsque la retenue entrante dans le premier additionneur de la série n'est pas connue, il est possible de gagner du temps grâce aux deux hypothèses mentionnées plus haut, en effectuant les calculs d'addition pendant le temps nécessaire à l'arrivée de la retenue entrante à l'entrée de la série d'additionneurs.

D'une façon générale, les additionneurs parallèles peuvent être de deux types : les additionneurs de type "itératif" et ceux de type "récursif". Dans ces deux types d'additionneurs, la propagation de la retenue est le problème essentiel.

Dans un additionneur de type itératif, on construit un additionneur pour n bits, en ajoutant une cellule élémentaire (additionneur complet ou full adder), à un additionneur comprenant déjà n-1 cellules élémentaires reliées en série. Cette structure traduit la relation de récurrence de l'addition. Pour augmenter la vitesse de propagation d'un additionneur de ce type, il est nécessaire d'optimiser un chemin unique de propagation de la retenue. L'exemple classique d'un tel type d'additionneur est l'additionneur de type Manchester à chaîne de propagation de retenue (Manchester carry chain).

Dans un additionneur de type récursif, on subdivise un additionneur à n bits en deux additionneurs à n/2 bits. Dans ce type d'additionneur, le temps de propagation de la retenue est théoriquement Log(n)T, si T désigne le temps de propagation pour une cellule élémentaire. Cette structure récursive est essentiellement utilisée dans des additionneurs utilisant des structures en arbre qui permettent de distribuer les informations nécessaires aux différentes cellules en un temps optimisé. Ce type d'additionneur est souvent qualifié d'additionneur à retenue anticipée (carry look ahead adder).

D'une manière générale, les additionneurs de type itératif nécessitent moins de silicium pour leur fabrication, mais ils sont moins rapides que les additionneurs de type récursif qui eux, consomment beaucoup de silicium.

Entre les solutions itératives et les solutions récursives, il existe des solutions intermédiaires connues qui sont en fait des solutions de compromis.

Ces solutions de compromis utilisent à la fois l'aspect itératif de l'additionneur pour son faible encombrement et l'aspect récursif pour ses performances en vitesse.

L'une de ces solutions connues de compromis est un additionneur de type à "sélection de retenue" (carry select adder), optimisé. Cette solution consiste à découper l'addition en plusieurs tranches. Pour chacune de ces tranches on fait des hypothèses, comme indiqué plus haut, sur la retenue entrante dans chaque tranche. La retenue entrante dans chaque tranche est déterminée de proche en proche à l'aide d'une série de cellules qui effectuent l'opération logique $g.r + p$ ; dans cette relation, $g$ est un bit qui indique s'il y a ou non génération de retenue, $r$ désigne un bit de retenue, et $p$ est un bit qui indique s'il y a ou non propagation de la retenue. Ce type d'additionneur peut être qualifié d'additionneur de type $g.r + p$.

L'additionneur dont la retenue entrante est égale à zéro a pour retenue sortante la retenue générée par la tranche, que l'on désigne par $G_t$.

L'additionneur dont la retenue entrante est égale à 1 a pour retenue sortante sa propre retenue calculée. Le bit de propagation est égal à 1 et est désigné par $P_t$ quand il y a propagation de la tranche. Si $rIN$ désigne la retenue réelle qui entre dans une tranche, la retenue sortante $rOUT$ est obtenue par l'opération logique $rOUT = G_t + P_t.rIN$.

Les calculs sont effectués en parallèle dans les différentes tranches et l'optimisation d'un additionneur de ce type porte sur le nombre de bits que chaque tranche doit calculer pour rendre tous les chemins de propagation critiques, dans une structure d'additionneurs en arbre, de niveau hiérarchique prédéterminé. Les définitions concernant les chemins critiques, les structures en arbre et les niveaux hiérarchiques, sont données dans les revues précitées.

Dans un additionneur à sélection de retenue optimisé, on peut augmenter progressivement le nombre de cellules élémentaires d'addition dans chaque nouvelle tranche, de sorte que le temps de calcul nécessaire à une tranche, soit égal à celui de la tranche précédente, augmenté du temps de sélection de la retenue. On obtient dans ce cas un additionneur à sélection de retenue optimisé.

Une autre solution connue de compromis est l'utilisation d'un additionneur à saut de retenue (Carry Skip Adder). Ce type d'additionneur ressemble au précédent pour la propagation de la retenue. La différence avec l'additionneur précédent est que pour chaque tranche, on utilise un seul additionneur de type itératif (comportant plusieurs cellules élémentaires d'addition reliées en série) dont la retenue entrante est la retenue provenant de la cellule de sélection de retenue précédente. Il faut cependant, pour chaque tranche, calculer la fonction de propagation pour commander la cellule de selection correspondante. Le nom de cet additionneur vient du fait que la retenue peut être propagée plus vite, par une ligne parallèle aux additionneurs en série et qui est un chemin beaucoup plus rapide que celui qui traverse la série d'additionneurs.

Cet additionneur présente un inconvénient par rapport au précédent : pour rendre tous les chemins critiques, aussi bien pour la somme à calculer que pour la retenue, il est nécessaire en allant des poids faibles aux poids forts de bits à additionner, d'augmenter la taille des tranches (c'est-à-dire le nombre d'additionneurs élémentaires en série dans chaque tranche), puis de diminuer cette taille à partir du milieu de l'additionneur. La diminution de la taille des tranches est en effet indispensable afin d'éviter que la retenue ne soit obtenue trop rapidement par rapport à la somme S.

Pour l'additionneur à sélection de retenue (carry select adder) optimisé, la taille des tranches augmente en progression linéaire. Le temps de sélection de la somme varie dans l'hypothèse d'un temps de sélection égal à un temps de propagation à travers un Full-Adder. On dit de manière connue, que l'on calcule approximativement $n$-$(n+1)/2$ bits en un temps $nT$, $n^2/2$ bits sont calculés en $nT$ et $n$ bits sont calculés en $\sqrt{2}nT$ (T désignant le temps nécessaire au calcul de l'addition de deux bits de données).

Pour l'additionneur à saut de retenue, optimisé (carry skip adder), la taille des tranches augmente en progression linéaire pour la première moitié des bits à additionner et décroît ensuite de la même manière. On dit, pour ce type d'additionneur, que l'on calcule approximativement $n$ bits en un temps égal à $2\sqrt{n}t$.

D'une façon générale ces deux solutions ont un comportement asymptotique en racine carrée de N, et si l'additionneur à saut de retenue optimisé est plus lent que l'additionneur à sélection de retenue optimisé, il est par contre moins coûteux en substrat servant à sa fabrication.

Les additionneurs utilisant des solutions arborescentes (Carry Look Akead Adder par exemple), totalement itératives, occupent une surface importante qui croît en N logarithme de N (N étant le nombre de bits respectifs des données à additionner), tandis que les solutions totalement itératives sont très lentes.

Les solutions optimisées, telles que l'additionneur à saut de retenue ou l'additionneur à sélection de retenue, sont un compromis intéressant mais ne sont pas totalement satisfaisantes : elles ne permettent pas, tout en conservant une surface occupée proche de celle d'un additionneur à saut de retenue, d'atteindre la performance de vitesse d'un additionneur à sélection de retenue.

L'invention a pour but de remédier à ces inconvénients et notamment de réaliser un additionneur occupant une surface voisine de celle d'un additionneur à saut de retenue, tout en présentant une performance en vitesse voisine de celle d'un additionneur à sélection de retenue.

L'additionneur de l'invention présente, comme on le verra plus loin en détail, une nouvelle structure dite récursive, qui permet d'obtenir un facteur de mérite vitesse/surface particulièrement élevé.

L'invention a pour objet un additionneur de type récursif, pour calculer la somme de deux opérandes A et B formés respectivement de données binaires $a_1$, $a_2$, ...$a_n$ et $b_1$, $b_2$, ..., $b_n$ de différents poids, les opérandes A et B comprenant un premier et un deuxième opérandes AL et BL formés respectivement par des données de poids faibles et un troisième et un quatrième opérandes AH et BH formés respectivement par des données de poids forts, caractérisé par le fait que pour un niveau NH de récursivité de l'additionneur et pour un ordre K de cet additionneur, cet additionneur est noté $AD_K^{NH}$, NH étant un nombre entier supérieur ou égal à 1 et représentant le nombre de récursivités de niveaux qu'il est nécessaire d'effectuer pour construire une structure de niveau NH à partir d'une structure de niveau NH-1, et ainsi de suite jusqu'au niveau 1, K étant un nombre entier définissant un nombre de cellules élémentaires d'addition dans un additionneur de niveau 1 et K≧2, ledit additionneur $AD_K^{NH}$ comporte:

-   un premier additionneur

$$AD^{NH}_{K-1}$$

d'ordre K-1 et de niveau NH comportant des entrées recevant respectivement les premier et deuxième opérandes AL et BL de poids faibles, et une première et une deuxième sorties fournissant respectivement un opérande de sommation SL des premier et deuxième opérandes AL et BL de poids faibles, et un bit de retenue sortante COUT, pour la sommation effectuée ;
-   un deuxième additionneur

$$ADP^{NH-1}_{K-1}$$

d'ordre K-1 et de niveau NH-1 comportant des entrées recevant respectivement les troisième et quatrième opérandes AH et BH de poids forts, une entrée (CIN) reliée à la deuxième sortie (COUT) du premier additionneur, et une première, une deuxième et une troisième sorties fournissant respectivement un opérande de sommation SH des troisième et quatrième opérandes AH et BH de poids forts, un bit P de propagation de retenue correspondant à cette sommation et un bit G de génération de cette retenue ;
-   un sélecteur global de retenue (SE) comportant trois entrées (C, G, P) respectivement reliées à la deuxième sortie du premier additionneur et aux deuxième et troisième sorties du deuxième additionneur, et une sortie fournissant un bit

$$C^{NH}_{OUT}$$

de retenue globale sortante résultant de la sommation logique :

$$C^{NH}_{OUT} = G + P.COUT$$

Selon une autre caractéristique de l'invention, le deuxième additionneur

$$ADP^{NH-1}_{K-1}$$

comporte :

-   un troisième additionneur

$$ADP^{NH-1}_{K-2}$$

d'ordre K-2 et de niveau NH-2 comportant des entrées recevant respectivement des opérandes AHL et BHL constitués respectivement de données de poids faibles des troisième et quatrième opérandes AH et BH, et une entrée (CIN) de retenue entrante reliée à la deuxième sortie du premier additionneur pour recevoir le bit (COUT) de retenue sortante de ce premier additionneur, et des première, deuxième et troisième sorties pour fournir respectivement un opérande (SHL) de sommation des opérandes AHL et BHL reçus en entrée, un bit (G1) de génération de retenue et un bit (P1) de propagation de retenue de la sommation effectuée ;
-   un premier sélecteur intermédiaire de retenue (SES) comportant trois entrées respectivement reliées à la deuxième sortie (COUT) du premier additionneur, à la deuxième sortie (G1) du troisième additionneur et à la troisième sortie (P1) du troisième additionneur, ce premier sélecteur de retenue fournissant sur une sortie un bit $C_1OUT$ de retenue sortante obéissant à la sommation logique :

$$C_1OUT = G1 + P1.COUT$$

-   un quatrième additionneur

$$ADP^{NH-2}_{K-2}$$

d'ordre K-2 et de niveau NH-2 comportant des entrées recevant respectivement des opérandes AHH et BHH constitués respectivement de données de poids forts des troisième et quatrième opérandes, une entrée (C2IN) de retenue entrante reliée à la sortie du premier sélecteur (SES) pour recevoir le bit de retenue sortante (C1OUT) de ce sélecteur et des première, deuxième et troisième sorties fournissant respectivement un opérande (SHH) de sommation des opérandes (AHH et BHH) reçus en entrée, un bit (G2) de génération de retenue, et un opérande (P2) de propagation de retenue de la sommation effectuée ;
-   un deuxième sélecteur intermédiaire (SEC) de génération de retenue, comprenant trois entrées respectivement reliées à la deuxième sortie (G1) de génération de retenue du troisième additionneur à la deuxième sortie (G2) de génération de retenue du quatrième additionneur et à la troisième sortie (P2) de propagation de retenue du quatrième additionneur, ce deuxième sélecteur fournissant sur une sortie correspondant à la troisième sortie du deuxième additionneur, le bit (G) de génération de retenue de ce deuxièmee additionneur, résultant de la sommation logique :

$$G = G2 + P2.G1$$

- une porte logique de type "ET" à deux entrées respectivement reliées à la troisième sortie (P2) de propagation du quatrième additionneur et à la troisième sortie (P1) de propagation du troisième additionneur, cette porte logique fournissant sur une sortie correspondant à la deuxième sortie du deuxième additionneur, le bit de propagation P de sortie de ce deuxième additionneur, résultant de la multiplication logique $P = P1.P2$.

Selon une autre caractéristique, l'additionneur $ADP_K^1$ d'ordre K et de niveau 1, obtenu de manière récursive, à partir de l'additionneur

$$ADP_{K-1}^{NH-1}$$

d'ordre K-1 et de niveau NH-1, capable d'additionner deux à deux des bits d'une tranche de données $a_i$, $a_{i+1}$, ..., $a_{i+j}$, $a_{i+K}$ et $b_i$, $b_{i+1}$, ..., $b_{i+j}$, $b_{i+K}$ des deux opérandes A et B (i étant compris entre 1 et n), comporte :

- une succession d'au moins K cellules élémentaires d'addition, de type "additionneurs complets", chaque cellule ($FA_{i+j}$) de rang $i+j$ comportant deux entrées pour recevoir respectivement une paire de bits tels que ($a_{i+j}$, $b_{i+j}$), une entrée de retenue entrante pour recevoir un bit de retenue sortante ($r_{i+j-1}$) fourni par une première sortie de retenue sortante d'une cellule élémentaire précédente $FA_{i+j-1}$ de ladite succession, l'entrée de retenue entrante de la première cellule élémentaire de ladite succession recevant un bit de valeur 0 et la sortie de retenue sortante de la dernière cellule élémentaire de ladite succession fournissant un bit (G) de génération de retenue pour ladite succession, chaque cellule élémentaire ($FA_{i+j}$) comportant en outre une deuxième et une troisième sorties fournissant respectivement un bit de sommation locale $s_{i+j}$ et un bit de propagation $p_{i+j}$, les bits $r_{i+j}$, $s_{i+j}$ et $p_{i+j}$ résultant des opérations logiques :

$$r_{i+j} = (r_{i+j-1}.p_{i+j}) + (a_{i+j}.b_{i+j})$$
$$p_{i+j} = a_{i+j} \oplus b_{i+j}$$
$$s_{i+j} = a_{i+j} \oplus b_{i+j} \oplus r_{i+j-1}$$

dans lesquelles . est l'opérateur "ET", et + est l'opérateur "OU INCLUSIF" et $\oplus$ est l'opérateur "OU EXCLUSIF" ;

- un ensemble logique (CP) de calcul de la propagation P de la retenue pour cet additionneur comportant des entrées respectivement reliées aux troisièmes sorties ($p_{i+j}$) de propagation des cellules élémentaires pour fournir sur une sortie un bit $p_{i+K}$ de propagation pour cet additionneur $ADP_K^1$ résultant de l'opération logique :

$$P_{i+k} = p_{i+k}.p_{i+k-1}. \ldots .p_{i+1}.p_i$$
$$ou\ P_{i+k} = P_{i+k-1}.p_{i+k}$$

- un ensemble logique (CS) de calcul de sommation comportant des entrées respectivement reliées aux deuxièmes sorties de sommation des cellules élémentaires, à des sorties $p_{i+j}$ de propagation de l'ensemble de propagation (CP) fournissant des bits $p_{i+j} = p_{i+j-1}.p_{i+j}$, et une entrée de retenue entrante CIN reliées à la sortie de retenue sortante d'un additionneur précédent, cet ensemble de calcul de sommation (CS) fournissant respectivement sur des sorties des opérandes de sommation $S_i$,..., $S_{i+j}$, ..., $S_{i+K}$ calculés par l'additionneur $ADP_K^1$ et résultant de l'opération logique :

$$S_{i+j} = s_{i+j} \oplus (P_{i+j-1}.CIN)$$

avec $P_{i-1} = 1$

Selon une autre caractéristique, l'additionneur $AD_K^1$ d'ordre K et de niveau 1 est constitué comme un additionneur $ADP_K^1$ d'ordre K et de niveau 1 dont l'entrée de retenue entrante (CIN) reçoit un bit (CIN) égal à 0.

Les caractéristiques et avantages de l'invention ressortiront mieux de la description qui va suivre, donnée en référence aux dessins annexés dans lesquels :
- la figure 1 représente schématiquement, un additionneur $AD_K^{NH}$ de niveau NH et d'ordre K, à structure récursive, conforme à l'invention,
- la figure 2 représente schématiquement l'un des additionneurs

$$ADP_{K-1}^{NH-1}$$

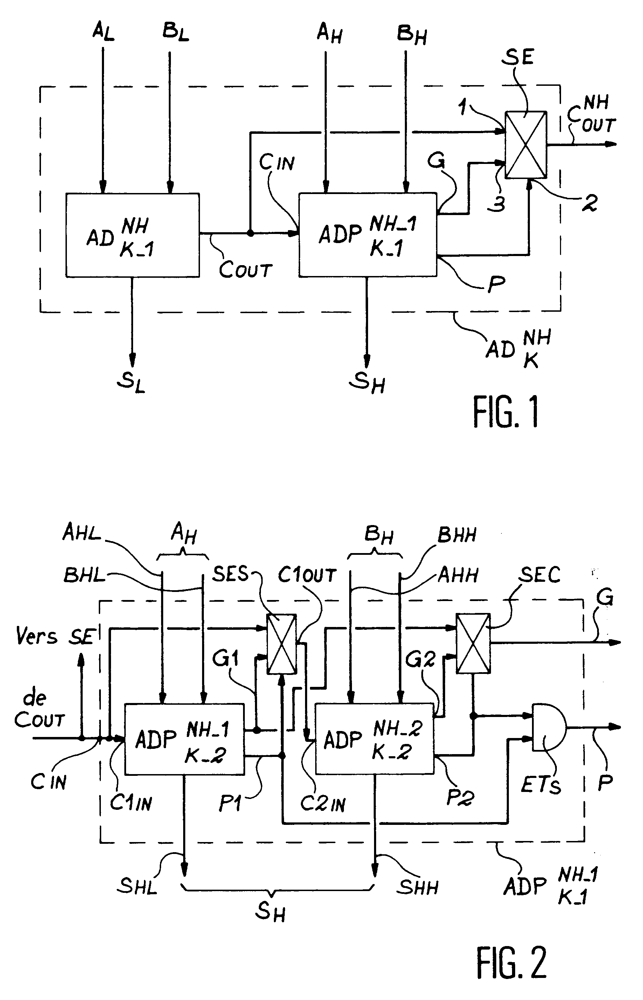

d'ordre K-1 et de niveau NH-1 à structure récursive, appartenant à l'additionneur à structure récursive de la figure 1,

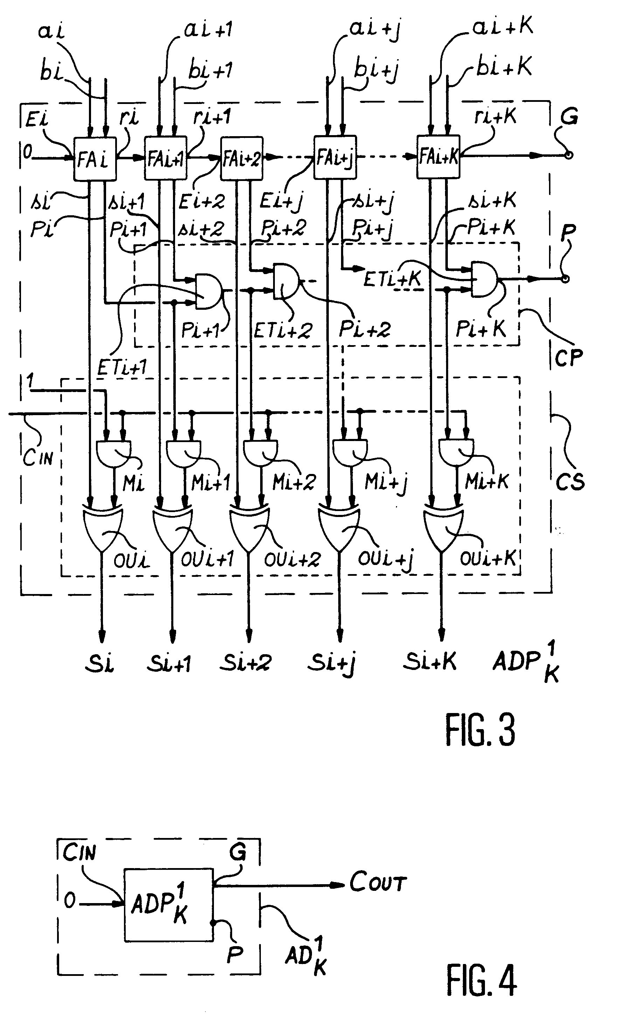

- la figure 3 représente schématiquement un additionneur $ADP_K^1$ d'ordre K et de rang 1, appartenant à l'additionneur à structure récursive de la figure 1,
- la figure 4 représente schématiquement un additionneur $AD_K^1$ d'ordre K et de rang 1 déduit de l'additionneur $ADP_K^1$ de la figure 3.

L'additionneur $AD_K^{NH}$ à structure récursive représenté schématiquement sur la figure 1 présente un niveau NH de récursivité et un ordre K. L'ordre K correspond au nombre de cellules élémentaires d'addition ou additionneurs complets (en anglais "FULL ADDERS") que comprend un additionneur de niveau $NH = 1$. Le niveau NH (NH étant un entier) est en fait le nombre de récursivités qu'il est nécessaire d'effectuer pour construire un additionneur présentant une structure de niveau NH, à partir d'une structure de niveau NH-1, et ainsi de suite jusqu'au niveau 1. De tels additionneurs présentent une structure en arbre dont les différentes branches comprennent des séries d'additionneurs complets.

L'additionneur $AD_K^{NH}$ représenté sur cette figure permet de calculer la somme de deux opérandes A et B formés respectivement de données binaires $a_1$, $a_2$, $a_i$, $a_n$ et $b_1$, $b_2$, $b_i$, $b_n$ (avec $1 \leq i \leq n$) présentant différents poids. Ces deux opérandes peuvent être eux-mêmes constitués par un premier et un deuxième opérandes AL et BL formés respectivement des données binaires $a!_i$ et $b_i$ de poids faibles et d'un troisième et quatrième opérandes AN et BH formés respectivement par les données binaires $a_i$ et $b_i$ de poids forts.

L'additionneur $AD_K^{NH}$ comporte de façon récursive, un premier additionneur

$$AD_{K-1}^{NH}{}'$$

d'ordre K-1 et de niveau NH, construit lui-même de façon récursive. Ce premier additionneur comporte des entrées qui reçoivent respectivement les premier et deuxième opérandes AL et BL de poids faibles. Une première sortie de ce premier additionneur fournit l'opérande SL résultant de la sommation des opérandes AL et BL reçus en entrée. Une deuxième sortie de ce premier additionneur fournit un bit COUT de retenue sortante, résultant de la sommation effectuée.

L'additionneur $AD_K^{NH}$ comporte aussi un deuxième additionneur

$$ADP_{K-1}^{NH-1}$$

d'ordre K-1 et de niveau NH-1 construit lui aussi de manière récursive. Ce deuxième additionneur comporte des entrées qui reçoivent respectivement les troisième et quatrième opérandes AH et BH constitués par les données de poids forts. Une entrée CIN de cet additionneur, dite de "retenue entrante" est reliée à la deuxième sortie du premier additionneur

$$AD_{K-1}^{NH}{}'$$

pour recevoir le bit COUT de retenue sortante de ce premier additionneur. Ce deuxième additionneur

$$ADP_{K-1}^{NH-1}$$

comporte aussi une première sortie qui fournit un opérande SH de sommation des troisième et quatrième opérandes AH et BH des données de poids forts reçues en entrée. Une deuxième sortie de ce deuxième additionneur fournit un bit P de propagation de la retenue tandis qu'une troisième sortie fournit un bit G de génération de la retenue résultant de la sommation.

Enfin, l'additionneur $AD_K^{NH}$ comporte un sélecteur de retenue SE. Ce sélecteur de retenue comporte trois entrées 1, 2, 3 qui sont respectivement reliées à la deuxième sortie du premier additionneur

$$AD_{K-1}^{NH}{}'$$

et aux deuxième et troisième sorties du deuxième additionneur

$$ADP_{K-1}^{NH-1}$$

pour recevoir respectivement les bits COUT, P et G. Ce sélecteur de retenue fournit sur une sortie, un bit de retenue globale de sortie

$$C_{OUT}^{NH}$$

de l'additionneur $AD_K^{NH}$ considéré.

Ce bit de retenue globale sortant résulte de la sommation logique

$$C_{OUT}^{NH} = G + P.COUT$$

effectuée par le sélecteur SE et dans laquelle le signe + désigne un "OU INCLUSIF" et le signe "." un "ET" logique.

La figure 2 repésente schématiquement et de manière plus détaillée le deuxième additionneur

$$ADP_{K-1}^{NH-1}$$

d'ordre K-1 et de niveau NH-1 de la figure 1. Cette figure permet de mieux comprendre la récursivité de la structure de l'additionneur de la figure 1. Le deuxième additionneur

$$ADP_{K-1}^{NH-1}$$

qui est représenté sur la figure 2 est lui même construit de manière récursive et comporte un troisième additionneur noté

$$ADP_{K-2}^{NH-1}$$

d'ordre K-2 et de niveau NH-2. Ce troisième additionneur comporte des entrées qui reçoivent respectivement des opérandes AHL et BHL constitués respectivement de données de poids faibles contenues dans les troisième et quatrième opérandes AH et BH. Une entrée CIN de retenue entrante de ce troisième additionneur et qui est aussi l'entrée CIN du deuxième additionneur

$$ADP_{K-1}^{NH-1}$$

décrit plus haut, est reliée à la deuxième sortie du premier additionneur

$$AD_{K-1}^{NH}$$

pour recevoir le bit COUT de retenue sortante de ce premier additionneur.

Le troisième additionneur

$$ADP_{K-2}^{NH-1}$$

comporte des première, deuxième et troisième sorties qui fournissent respectivement un opérande SHL de sommation des opérandes AHL et BHL reçus en entrée, un bit G1 de génération de retenue sortante et un bit P1 de propagation de retenue sortante de la sommation effectuée par ce troisième additionneur.

Le deuxième additionneur

$$ADP_{K-1}^{NH-1}$$

comporte aussi un premier sélecteur de retenue intermédiaire SES qui comporte trois entrées. Ces trois entrées sont respectivement reliées à la deuxième sortie du premier additionneur

$$AD_{K-1}^{NH}$$

et à la deuxième et à la troisième sorties du troisième additionneur

$$ADP_{K-2}^{NH-1}$$

pour recevoir respectivement les bits COUT, G1 et P1. Ce premier sélecteur SES de retenue intermédiaire fournit sur une sortie, un bit C1OUT de retenue sortante our la sommation effectuée par le troisième additionneur

$$ADP_{K-2}^{NH-1}$$

Ce bit C1OUT résulte de la sommation logique :
C1OUT = G1 + P1.COUT effectuée par le premier sélecteur intermédiaire SES. Comme précédemment, le signe + désigne un "OU INCLUSIF" et le signe "." un "ET" logique.

Enfin, le deuxième additionneur

$$ADP_{K-1}^{NH-1}$$

comporte un quatrième additionneur

$$ADP_{K-2}^{NH-2}$$

d'ordre K-2 et de niveau NH-2, un deuxième sélecteur intermédiaire SEC et une porte logique "ET" de sortie.

Le quatrième additionneur comporte des entrées recevant respectivement des opérandes AHH et BHH constitués respectivement de données de poids forts des troisième et quatrième opérandes AH et BH décrits plus haut. Une entrée C2IN du quatrième additionneur

$$ADP_{k-2}^{NH-2}$$

est reliée à la sortie du premier sélecteur intermédiaire SES pour recevoir le bit de retenue sortante C1OUT fourni par ce premier sélecteur intermédiaire.

Le quatrième additionneur comporte aussi des première, deuxième et troisième sorties qui fournissent respectivement un opérande SHH de sommation des opérandes d'entrée AHH et BHH, un bit G2 de génération de retenue et un bit P2 de propagation de retenue pour la sommation effectuée par ce quatrième additionneur.

Le deuxième sélecteur intermédiaire SEC fournit un bit de retenue G, qui est le bit de retenue sortante du deuxième additionneur

$$ADP_{K-1}^{NH-1}$$

Le deuxième sélecteur SEC comporte trois entrées qui sont respectivement reliées à la deuxième sortie de génération du troisième additionneur

$$ADP_{K-2}^{NH-1}{}'$$

à la deuxième sortie de génération du quatrième additionneur

$$ADP_{K-2}^{NH-2}{}'$$

et à la troisième sortie de propagation du quatrième additionneur, pour recevoir respectivement les bits G1, G2 et P2. Ce deuxième sélecteur intermédiaire SEC, fournit sur une sortie de génération de retenue, qui est aussi la deuxième sortie du deuxième additionneur

$$ADP_{K-1}^{NH-1}{}'$$

le bit G de génération de retenue. Ce bit résulte de la sommation logique G = G2 + P2.G1 effectuée par le deuxième sélecteur SEC et dans laquelle le signe + désigne l'opération logique "OU INCLUSIF" et le signe "." désigne l'opération logique ET.

La porte logique de sortie notée ET$_S$ comporte deux entrées qui sont respectivement reliées aux troisièmes sorties des troisième et quatrième additionneurs

$$ADP_{K-2}^{NH-1}$$

et

$$ADP_{K-2}^{NH-2}$$

pour recevoir respectivement les bits de propagation P1, P2. Cette porte logique fournit sur une sortie qui correspond à la deuxième sortie de propagation du deuxième additionneur

$$ADP_{K-1}^{NH-1}{}'$$

le bit de propagation P. Ce bit résulte de la multiplication logique P = P1.P2.

La figure 3 représente schématiquement l'additionneur ADP$_K^1$ d'ordre K et de niveau 1. Cet additionneur est obtenu de manière récursive à partir de l'additionneur

$$ADP_{K-1}^{NH-1}$$

d'ordre K-1 et de niveau NH-1. Il permet d'additionner deux à deux des bits d'une tranche de données $a_i$, $a_{i+1}$, ..., $a_{i+j}$ ...$a_{i+K}$, et $b_i$, $b_{i+1}$, ...$b_{i+j}$, ...$b_{i+k}$, d'une tranche de données des deux opérandes A et B (i étant compris entre 1 et n). Cet additionneur comporte au moins K cellules élémentaires d'addition, de type "addditionneurs complets" (ou en anglais "Full Adders"). Ces cellules sont représentées en FA$_i$, FA$_{i+1}$, ... FA$_{i+j}$, ...FA$_{i+K}$ sur la figure. C'est ainsi que par exemple la cellule FA$_i$ comporte deux entrées pour recevoir respectivement les bits

$a_i$ et $b_j$. De la même manière, les bits $a_j$ et $b_j$ sont eux aussi appliqués à deux entrées de la cellule $FA_{i+j}$, tandis que les bits $a_K$ et $b_K$ sont appliqués à deux entrées de la cellule $FA_{i+K}$.

Chaque cellule élémentaire d'addition comporte aussi une entrée de retenue entrante pour recevoir un bit de retenue sortante fourni par une première sortie de retenue sortante d'une cellule d'addition précédente, de la succession de cellules. C'est ainsi que la cellule ou additionneur complet $FA_{i+j}$ comporte une entrée $E_{i+j}$ qui reçoit un bit de retenue entrante $r_{i+j-1}$ provenant d'une première sortie de l'additionneur $FA_{i+j-1}$ précédent (non représenté sur la figure). De la même manière, une entrée $E_{i+2}$ de l'additionneur $FA_{i+2}$, reçoit un bit de retenue sortante $r_{i+1}$ d'une première sortie de l'additionneur précédent $FA_{i+1}$.

Comme on le verra plus loin en détail, l'entrée $E_i$ de retenue entrante du premier additionneur $FA_i$ de la succession reçoit un bit de valeur 0, tandis que la sortie de retenue sortante de la succession fournit un bit $r_{i+K} = G$ de génération de retenue pour la succession d'additionneurs.

Chaque cellule élémentaire telle que $FA_{i+j}$ comporte aussi une première et une deuxième sorties qui fournissent respectivement un bit de sommation locale $s_{i+j}$ et un bit de propagation locale $P_{i+j}$.

De façon connue, pour les cellules d'additionneurs complets ou Full Adders, les bits $p_{i+j}$, $r_{i+j}$ $s_{i+j}$ résultent des opérations logiques suivantes :

$$p_{i+j} = a_{i+j-1} \oplus b_{i+j}$$
$$r_{i+j} = (r_{i+j-1}.p_{i+j}) + (a_{i+j}.b_{i+j})$$
$$s_{i+j} = a_{i+j} \oplus b_{i+j} \oplus r_{i+j-1}$$

dans ces opérations, . désigne l'opérateur "ET", $\oplus$ est l'opérateur "OU EXCLUSIF" et + est l'opérateur "OU INCLUSIF".

L'additionneur $ADP_K^1$ représenté sur la figure comporte aussi un ensemble logique CP de calcul de la propagation de la retenue pour cet additionneur. Cet ensemble comporte des entrées qui sont respectivement reliées aux deuxième et troisième sorties des cellules élémentaires $FA_i$, $FA_{i+1}$, ... $FA_{i+j}$, ... $FA_{i+K}$. Cet ensemble reçoit donc les bits de sommations locales $s_i$, $s_{i+1}$, ... $s_{i+j}$, ... $s_{i+K}$, et les bits de propagation locales $p_i$, $p_{i+1}$, ... $p_{i+K}$, ... $p_{i+K}$. Il fournit sur sa sortie P, un bit $P_i = K$ de propagation de la retenue, pour cet additionneur $ADP_K^1$. Ce bit résulte de l'opération logique :

$$P_{i+K} = p_{i+K}.p_{i+K-1}. .... .p_{i+1}.p_i$$

ou encore

$$P_{i+K} = P_{i+K-1}.p_{i+K}$$

Relation dans laquelle le signe "." désigne l'opérateur logique "ET".

L'ensemble de calcul de propagation CP comporte des portes logiques de type "ET" notées $ET_{i+1}$, $ET_{i+2}$, ... $ET_{i+K}$ sur la figure. Chacune de ces portes comporte deux entrées. Les deux entrées de la première porte $ET_{i+1}$ sont respectivement reliées aux sorties de propagation $p_i$ et $p_{i+1}$ de la première paire de cellules $FA_i$, $FA_{i+1}$. La porte $ET_{i+2}$ comporte deux entrées qui sont respectivement reliées à la troisième sortie de propagation $p_{i+2}$ de la cellule $FA_{i+2}$ et à la sortie de la porte $ET_{i+1}$ précédente.

De la même manière, la porte $ET_{i+K}$ comporte deux entrées qui sont respectivement reliées à la troisième sortie de propagation de la cellule $FA_{i+K}$ et à la sortie de la porte $ET_{i+K-1}$ précédente.

La porte $ET_{i+2}$ par exemple fournit donc un bit $P_{i+2} = P_{i+1}.p_{i+2}$ et la porte $ET_{i+K}$ fournit un bit $P_{i+K} = P_{i+K-1}.p_{i+K}$. D'une manière générale, on a $P_{i+j} = P_{i+j-1}.p_{i+j}$. L'additionneur $ADP_K^1$ comporte aussi un ensemble logique CS de calcul de sommation, qui fournit sur des sorties, des opérandes $S_i$, $S_{i+1}$, ..., $S_{i+j}$, ..., $S_{i+K}$ de sommation des données binaires reçues sur les premières entrées de l'additionneur. Cet ensemble comporte des entrées qui sont respectivement reliées aux deuxièmes sorties $s_i$, $s_{i+1}$, ..., $s_{i+j}$, ..., $s_{i+K}$ des cellules élémentaires $FA_i$, $FA_{i+1}$, ..., $FA_{i+j}$, ..., $FA_{i+K}$. Cet ensemble comporte aussi des entrées qui sont respectivement reliées à des sorties de propagation $P_{i+1}$, $P_{i+2}$, ..., $P_{i+K}$ de l'ensemble de calcul de propagation CP. Ces sorties sont celles des portes ET des moyens de calcul CP qui fournissent des bits de propagation, de la forme $P_{i+j} = P_{i+j-1}.p_{i+j}$. La sortie de propagation $p_i$ de la première cellule $FA_i$ est reliée à l'une des entrées du moyen de calcul CS, car $P_i = p_i$. Cet ensemble de calcul de sommation CS comporte aussi une entrée CIN de retenue entrante.

L'ensemble de calcul de sommation CS fournit sur ses sorties, les opérandes de sommation des données $(a_i, b_i)$, $(a_{i+1}, b_{i+1})$, ... $(a_{i+K}, b_{i+K})$ reçues en entrée.

Cet ensemble permet d'effectuer l'opération logique :

$$S_{i+j} = s_{i+j} \oplus (P_{i+j-1}.CIN) \text{ en prenant } P_{i-1} = 1$$

L'ensemble CS de calcul de sommation comporte des portes logiques $M_i$, $M_{i+1}$, ..., $M_{i+j}$, ..., $M_{i+K}$ de type ET à deux entrées et des portes logiques $OU_i$, $OU_{i+1}$, ..., $OU_{i+j}$, ..., $OU_{i+K}$ de type "OU EXCLUSIF" à deux entrées.

L'une des entrées de chaque porte $M_{i+j}$ de type ET reçoit le bit CIN de retenue entrante, tandis que l'autre entrée reçoit le bit de propagation $P_{i+j}$ fourni par la sortie correspondante de l'ensemble de calcul CP. Seule la première porte $M_i$ reçoit sur une entrée d'une part le bit CIN de retenue entrante, et d'autre part, un bit de valeur 1, sur son autre entrée.

(voir plus haut la relation $p_{i-1} = 1$).

Les entrées de chaque porte $OU_{i+j}$ sont respectivement reliées à la sortie de la porte $M_{i+j}$ correspondante ainsi qu'à la deuxième sortie $S_{i+j}$ de la cellule élémentaire correspondante. C'est ainsi par exemple que la porte $OU_{i+1}$ est reliée à la sortie de la porte $M_{i+1}$ et à la sortie $s_{i+1}$ de la cellule élémentaire $FA_{i+1}$.

Cet ensemble de propagation fournit bien les opérandes de sommation tels que $S_{i+j} = s_{i+j} \oplus -(P_{i+j-1}.CIN)$.

Pour $S_{i+2}$ par exemple, on a bien :

$$S_{i+2} = s_{i+2} \oplus (P_{i+1}.CIN)$$

Pour les additionneurs $ADP_K^1$ qui traitent des tranches de bits de données de i à i+K (ou i appartient à {1, 2, .., n}), le nombre i dépend de la position de l'additionneur $ADP_K^1$ dans l'arbre qui constitue l'additionneur $AD_K^{NH}$. D'une manière générale, les additionneurs $ADP_K^1$ comportent au moins k cellules élémentaires d'addition.

La figure 4 représente schématiquement l'additionneur $AD_K^1$ d'ordre K et de niveau 1. Cet additionneur, compte tenu de la structure récursive décrite plus haut, est en fait constitué par un additionneur $ADP_K^1$ d'ordre K et de niveau 1, dont l'entrée de retenue entrante CIN reçoit un bit de valeur 0. L'une des sorties de cet additionneur fournit le bit de génération G, tandis que sa sortie P de propagation de retenue n'est pas connectée. L'additionneur $AD_K^1$ de départ peut avoir ou non une entrée CIN non nulle suivant que l'on souhaite réaliser un additionneur global avec retenue entrante nulle ou non nulle.

**Revendications**

1. Additionneur de type récursif, pour calculer la somme de deux opérandes A et B formés respectivement de données binaires $a_1$, $a_2$, ...$a_n$ et $b_1$, $b_2$, ..., $b_n$ de différents poids, les opérandes A et B comprenant un premier et un deuxième opérandes AL et BL formés respectivement par des données de poids faibles et un troisième et un quatrième opérandes AH et BH formés respectivement par des données de poids forts, caractérisé par le fait que pour un niveau NH de récursivité de l'additionneur et pour un ordre K de cet additionneur, cet additionneur est noté $AD_K^{NH}$, NH étant un nombre entier supérieur ou égal à 1 et représentant le nombre de récursivités de niveaux qu'il est nécessaire d'effectuer pour construire une structure de niveau NH à partir d'une structure de niveau NH-1, et ainsi de suite jusqu'au niveau 1, K étant un nombre entier définissant un nombre de cellules élémentaires d'addition dans un additionneur de niveau 1 et K≥2, ledit additionneur $AD_K^{NH}$ comporte :

- un premier additionneur

$$AD_{K-1}^{NH}$$

d'ordre K-1 et de niveau NH et comportant des entrées recevant respectivement les premier et deuxième opérandes AL et BL de poids faibles, et une première et une deuxième sorties fournissant respectivement un opérande de sommation SL des premier et deuxième opérandes AL et BL de poids faibles, et un bit de retenue sortante COUT, pour la sommation effectuée ;

- un deuxième additionneur

$$ADP_{K-1}^{NH-1}$$

d'ordre K-1 et de niveau NH-1 et comportant des entrées recevant respectivement tes troisième et quatrième opérandes AH et BH de poids forts, une entrée (CIN) reliée à la deuxième sortie (COUT) du premier additionneur, et une première, une deuxième et une troisième sorties fournissant respectivement un opérande de sommation SH des troisième et quatrième opérandes AH et BH de poids forts, un bit P de propagation de retenue correspondant à cette sommation et un bit G de génération de cette retenue ;

- un sélecteur global de retenue (SE) comportant trois entrées (1, 2, 3) respectivement reliées à la deuxième sortie (COUT) du premier additionneur et aux deuxième et troisième sorties (P, G) du deuxième additionneur, et une sortie fournissant un bit

$$C_{OUT}^{NH}$$

de retenue globale sortante résultant de la sommation logique :

$$C_{OUT}^{NH} = G + P \cdot COUT$$

**2.** Additionneur selon la revendication 1, caractérisé en ce que le deuxième additionneur

$$ADP_{K-1}^{NH-1}$$

comporte :
- un troisième additionneur

$$ADP_{K-2}^{NH-1}$$

d'ordre K-2 et de niveau NH-2 comportant des entrées recevant respectivement des opérandes AHL et BHL constitués respectivement de données de poids faibles des troisième et quatrième opérandes AH et BH, et une entrée (CIN) de retenue entrante reliée à la deuxième sortie du premier additionneur pour recevoir le bit (COUT) de retenue sortante de ce premier additionneur, et des première, deuxième et troisième sorties pour fournir respectivement un opérande (SHL) de sommation des opérandes AHL et BHL reçus en entrée, un bit (G1) de génération de retenue et un bit (P1) de propagation de retenue de la sommation effectuée ;
- un premier sélecteur intermédiaire de retenue (SES) comportant trois entrées respectivement reliées à la deuxième sortie (COUT) du premier additionneur, à la deuxième sortie (G1) du troisième additionneur et à la troisième sortie (P1) du troisième additionneur, ce premier sélecteur de retenue fournissant sur une sortie un bit $C_1$OUT de retenue sortante obéissant à la sommation logique :

$$C_1OUT = G1 + P1 \cdot COUT$$

- un quatrième additionneur

$$ADP_{K-2}^{NH-2}$$

d'ordre K-2 et de niveau NH-2 comportant des entrées recevant respectivement des opérandes AHH et BHH constitués respectivement de données de poids forts des troisième et quatrième opérandes, une entrée (C2IN) de retenue entrante reliée à la sortie du premier sélecteur (SES) pour recevoir le bit de retenue sortante (C1OUT) de ce sélecteur et des première, deuxième et troisième sorties fournissant respectivement un opérande (SHH) de sommation des opérandes (AHH et BHH) reçus en entrée, un bit (G2) de génération de retenue, et un opérande (P2) de propagation de retenue de la sommation effectuée ;
- un deuxième sélecteur intermédiaire (SEC) de génération de retenue, comprenant trois entrées respectivement reliées à la deuxième sortie (G1) de génération de retenue du troisième additionneur à la deuxième sortie (G2) de génération de retenue du quatrième additionneur et à la troisième sortie (P2) de propagation de retenue du quatrième additionneur, ce deuxième sélecteur fournissant sur une sortie correspondant à la troisième sortie du deuxième additionneur, le bit (G) de génération de retenue de ce deuxièmee additionneur, résultant de la sommation logique :

$$G = G2 + P2 \cdot G1$$

- une porte logique de type "ET" à deux entrées respectivement reliées à la troisième sortie (P2) de propagation du quatrième additionneur et à la troisième sortie (P1) de propagation du troisième additionneur, cette porte logique fournissant sur une sortie correspondant à la deuxième sortie du deuxième additionneur, le bit de propagation P de sortie de ce deuxième additionneur, résultant de la multiplication logique P = P1.P2.

**3.** Additionneur selon la revendication 2, caractérisé en ce que l'additionneur $ADP_K^1$ d'ordre K et de niveau 1, obtenu de manière récursive, à partir de l'additionneur

$$ADP_{K-1}^{NH-1}$$

d'ordre K-1 et de niveau NH-1, capable d'additionner deux à deux des bits d'une tranche de données $a_i$, $a_{i+1}$, ..., $a_{i+j}$, $a_{i+K}$, et $b_i$, $b_{i+1}$, ..., $b_{i+j}$, $b_{i+K}$ des deux opérandes A et B (i étant compris entre 1 et n), comporte :
- une succession d'au moins K cellules élémentaires d'addition, de type "additionneurs complets", chaque cellule ($FA_{i+j}$) de rang i + j comportant deux entrées pour recevoir respectivement une paire de bits tels que $(a_{i+j}, b_{i+j})$, une entrée de retenue entrante pour recevoir un bit de retenue sortante $(r_{i+j-1})$ fourni par une première sortie de retenue sortante d'une cellule élémentaire précédente $FA_{i+j-1}$ de ladite succession, l'entrée de retenue entrante de la première cellule élémentaire de ladite succession recevant un bit de valeur 0 et la sortie de retenue sortante de la dernière cellule élémentaire de ladite succession fournissant un bit (G) de génération de retenue pour ladite succession, chaque cellule élémentaire $(FA_{i+j})$ comportant en outre une deuxième et une troisième sorties fournissant respectivement un bit de sommation locale $s_{i+j}$ et un bit de propagation $p_{i+j}$, les bits $r_{i+j}$, $s_{i+j}$ et $p_{i+j}$ résultant des opérations logiques :

$$r_{i+j} = (r_{i+j-1}.p_{i+j}) + (a_{i+j}.b_{i+j})$$
$$p_{i+j} = a_{i+j} \oplus b_{i+j}$$
$$s_{i+j} = a_{i+j} \oplus b_{i+j} \oplus r_{i+j-1}$$

dans lesquelles . est l'opérateur "ET", et + est l'opérateur "OU INCLUSIF" et $\oplus$ est l'opérateur "OU EXCLUSIF" ;
- un ensemble logique (CP) de calcul de la propagation P de la retenue pour cet additionneur comportant des entrées respectivement reliées aux troisièmes sorties $(p_{i+j})$ de propagation des cellules élémentaires pour fournir sur une sortie un bit $p_{i+K}$ de propagation pour cet additionneur $ADP_K^1$ résultant de l'opération logique :

$$P_{i+k} = p_{i+k}.p_{i+k-1}. \ldots .p_{i+1}.p_i$$

ou

$$P_{i+k} = P_{i+k-1}.p_{i+k}$$

- un ensemble logique (CS) de calcul de sommation comportant des entrées respectivement reliées aux deuxième sorties de sommation des cellules élémentaires, à des sorties $p_{i+j}$ de propagation de l'ensemble de propagation (CP) fournissant des bits $p_{i+j} = p_{i+j-1}.p_{i+j}$, et une entrée de retenue entrante CIN reliées à la sortie de retenue sortante d'un additionneur précédent, cet ensemble de calcul de sommation (CS) fournissant respectivement sur des sorties des opérandes de sommation $S_i,..., S_{i+j}, ..., S_{i+K}$ calculés par l'additionneur $ADP_K^1$ et résultant de l'opération logique :

$$S_{i+j} = s_{i+j} \oplus (P_{i+j-1}.CIN)$$

avec $P_{i-1} = 1$

4. Additionneur selon la revendication 3, caractérisé en ce que l'additionneur $AD_K^1$ d'ordre K et de niveau 1 est constitué comme un additionneur $ADP_K^1$ d'ordre K et de niveau 1 dont l'entrée de retenue entrante (CIN) reçoit un bit (CIN) égal à 0.

**Claims**

1. Recursive type adder for calculating the sum of two operands A and B respectively formed of binary data $a_1, a_2, ... a_n$ and $b_1, b_2, ..., b_n$ of different significances, operands A and B comprising a first and a second operand AL and BL respectively formed of the less significant data and a third and forth operand AH and BH respectively formed of the more significant data, characterised by the fact that for a recursion level NH of the adder and for an order K of said adder, the latter is designated $AD_K^{NH}$, NH being an integer equal to or higher than 1 and representing the number of recursion levels which must he carried out for obtaining a structure of level NH from a structure of level NH-1 and so on to the level 1, K being an integer defining a number of elementary addition cells in an adder of level 1 and K$\geq$2, said adder $AD_K^{NH}$ having:
   - first adder

$$AD_{K-1}^{NH}$$

   of order K-1 and level NH comprising inputs respectively receiving the first and second less significant operands AL and BL, and a first and a second output respectively furnishing a sum operand SL from the first and second less significant operands AL and BL, and carry output bit COUT, for the addition effected;
   - a second adder

$$ADP_{K-1}^{NH-1}$$

   of order K-1 and level NH-1 comprising inputs respectively receiving the third and fourth more significant operands AH and BH, an input CIN connected to the second output (COUT) of the first adder and a first, a second and a third output respectively furnishing a sum operand SH from the third and forth more significant operands AH and BH, a carry propagation bit P corresponding to said sum and a generation bit G from said carry;

- a global carry selector (SE) comprising three inputs (1, 2, 3) respectively connected to the second output (COUT) of the first adder and to the second and third outputs (P, G) of the second adder, and an output furnishing an outgoing global carry bit

$$C_{OUT}^{NH}$$

resulting from the logic sum:

$$C_{OUT}^{NH} = G + P.COUT$$

2. Adder according to claim 1, characterized by the fact that the second adder

$$ADP_{K-1}^{NH-1}$$

comprises:

- a third adder

$$ADP_{K-2}^{NH-1}$$

of order K-2 and level NH-2 comprising inputs respectively receiving operands AHL and BHL respectively comprising less significant data from the third and fourth operands AH and BH, and an incoming carry input (CIN) connected to the second output of the first adder to receive outgoing carry bit (COUT) from said first adder, and first, second and third outputs respectively furnishing a sum operand (SHL) from operands AHL and BHL received at the input, a carry generation bit (G1) and a carry propagation bit (P1) of the sum effected;

- a first intermediate carry selector (SES) comprising three inputs respectively connected to the second output (COUT) of the first adder, to the second output (G1) of the third adder and to the third output (P1) of the third adder, said first carry selector furnishing outgoing carry bit $C_1OUT$ at one output, conforming to the logic sum:

$$C_1OUT = G1 + P1.COUT$$

- a fourth adder

$$ADP_{K-2}^{NH-2}$$

of order K-2 and level NH-2 comprising inputs respectively receiving operands AHH and BHH respectively consisting of more significant data from the third and fourth operands, an incoming carry input (C2IN) connected to the output of the first selector (SES) to receive outgoing carry bit (C1OUT) from said selector and first, second and third outputs respectively furnishing a sum operand (SHH) from the operands (AHH and BGG) received at the input, and a carry propagation operand (P2) from the sum effected;

- a second intermediate carry generation selector (SEC), comprising three inputs respectively connected to the second carry generation output (G1) of the third adder at the second carry generation output (G2) of the fourth adder and at the third carry propagation output (P2) of the fourth adder, said second selector furnishing at one output corresponding to the third output of the second adder, carry generation bit (G) of said second adder, resulting from the logic sum:

$$G = G2 + P2.G1$$

- a logic AND type port with two inputs respectively connected to the third propagation output (P2) of the fourth adder and to the third propagation output (P1) of the third adder, said logic port furnishing at one output corresponding to the second output of the second adder, propagation output bit P from said second adder, resulting from the logic multiplication $P = P1.P2$.

3. Adder according to clam 2, characterized by the fact that adder $ADP_K^1$ of order K and level 1, obtained in recursive fashion from adder

$$ADP_{K-1}^{NH-1}$$

of order K-1 and level NH-1, capable of adding bits two at a time from a segment of data $a_i$, $a_{i+1}$, ..., $a_{i+j}$, ..., $a_{i+K}$, and $b_1$, $b_{l+1}$, ..., $b_{i+j}$, $b_{i+K}$ from the two operands A and B (i being between 1 and n), comprises:

- a succession of at least K elementary addition cells for the "full adder" type, each cell ($FA_{i+j}$) in row $i+j$ comprising two inputs respectively receiving a pair of bits such as ($a_{i+j}$, $b_{i+j}$), an incoming carry input to receive outgoing carry bit ($r_{i+j-1}$) furnished by a first outgoing carry output of a preceding elementary cell $FA_{i+j-1}$ of said succession, the incoming carry input of the first elementary cell in said succession receiving a bit of 0 value and the outgoing carry output of the last elementary cell of said succession furnishing a carry generation bit (G) for said succession, each elementary cell ($FA_{i+j}$) further comprising a second and a third output respectively furnishing local sun bit $s_{i+j}$ and a propagation bit $p_{i+j}$, bits $r_{i+j}$, $s_{i+j}$ and $p_{i+j}$ resulting from the logic operations:

$$r_{i+j} = (r_{i+j-1} \cdot p_{i+j}) + (a_{i+j} \cdot b_{i+j})$$
$$P_{i+j} = a_{i+j} \oplus b_{i+j}$$
$$s_{i+j} = a_{i+j} \oplus b_{i+j} \oplus r_{i+j-1}$$

wherein "." is the AND operator, "+" is the "INCLUSIVE OR" operator and $\oplus$ is the "EXCLUSIVE OR" operator;

- a logic unit (CP) for carry propagation P for said adder comprising inputs respectively connected to the three propagation outputs ($p_{i+j}$) of the elementary cells to furnish at one output propagation bit $P_{i+k}$ for said adder $ADP_K^1$ resulting from the logic operation:

$$P_{i+k} = p_{i+k} \cdot p_{i+k-1} \cdot \ldots \cdot p_{i+1} \cdot p_1$$

or

$$P_{i+k} = P_{i+k-1} \cdot P_{i+k}$$

- a logic sum calculation unit (CS) comprising inputs respectively connected to the second addition outputs of the elementary cells, to propagation outputs $P_{i+j}$ of the propagation unit (CP) furnishing bits $P_{i+j} = P_{i+j-1} \cdot P_{i+j}$, and an incoming carry input CIN connected to the outgoing carry output of a preceding adder, said addition calculation unit respectively furnishing summing operand s , ..., s , ..., s at some outputs, calculated by adder ADP and resulting from the logic operation:

$$s_{i+j} = s_{i+j} \oplus (P_{i+j-1} \cdot CIN)$$

with
$$P_{i-1} = 1$$

4. Adder according to clam 3, characterized in that adder $AD_K^1$ of order K and level 1 comprises an adder $ADP_K^1$ of order K and level 1, wherein the input of the incoming carry (CIN) receives a bit (CIN) equal to 0.

**Patentansprüche**

1. Rekursiver Addierer zum Berechnen der Summe zweier Operanden A und B, die jeweils aus Binärdaten $a_1$, $a_2$ ..., $a_n$ und $b_1$, $b_2$ ..., $b_n$ verschiedenen Gewichts gebildet sind, wobei die Operanden A und B einen ersten und einen zweiten Operanden AL und BL umfassen, jeweils gebildet aus Daten schwachen Gewichts, sowie einen dritten und einen vierten Operanden AH und BH, jeweils gebildet aus Daten starken Gewichts, dadurch **gekennzeichnet**, daß für ein Rekursivniveau NH des Addierers und eine Ordnung K dieses Addierers dieser Addierer als $AD_K^{NH}$ bezeichnet wird, wobei NH eine ganze Zahl größer oder gleich 1 ist und die Anzahl der Niveaurekursivitäten angibt, die ausgeführt werden müssen, um eine Struktur von Niveau NH aus einer Struktur von NH-1, usw. bis zum Niveau 1, zu bilden, K eine ganze Zahl ist, welche die Anzahl von Additions-Elementarzellen in einem Addierer von Niveau 1 angibt, und K>2 ist, wobei der Addierer $AD_K^{NH}$ umfaßt:

- einen ersten Addierer $AD_K^{NH}$ der Ordnung K-1 und von Niveau NH, umfassend Eingänge, die den ersten bzw. zweiten Operanden AL bzw. BL schwachen Gewichts erhalten, einen ersten Ausgang, welchen einen Summationsoperanden des ersten und zweiten Operanden AL und BL niedrigen Gewichts liefert, und einen zweiten Ausgang, der ein Ausgangsübertragsbit COUT für die ausgerührte Summe liefert;
- einen zweiten Addierer $ADP_{K-1}^{NH-1}$ der Ordnung K-1 und von Niveau NH-1, umfassend Eingänge, die einen dritten bzw. vierten Operanden AH bzw. BH starken Gewichts erhalten, einen Eingang (CIN), der mit dem zweiten Ausgang (COUT) des ersten Addierers verbunden ist, und einen ersten, einen zweiten und einen dritten Ausgang, die einen Summationsoperanden SH des dritten und vierten Operanden AH und BH starken Gewichts, ein Übertrags-Propagationsbit P, das dieser Summe entspricht, bzw. ein Bit G liefern, das die Generation des Übertrags darstellt;

- einen globalen Übertragswähler (SE), umfassend drei Eingänge (1, 2, 3), verbunden mit dem zweiten Ausgang (COUT) des ersten Addierers und dem zweiten bzw. dritten Ausgang (G, P) des zweiten Addierers, und einen Ausgang, der ein globales Übertragsbit $C_{OUT}^{NH}$ aus der logischen Summe liefert:

$$C_{OUT}^{NH} = G - P \cdot COUT$$

2. Addierer nach Anspruch 1, dadurch **gekennzeichnet**, daß der zweite Addierer $ADP_{K-1}^{NH-1}$ umfaßt:

- einen dritten Addierer $ADP_{K-2}^{NH-1}$ der Ordnung K-2 und von Niveau NH-2, umfassend Eingänge, die Operanden AHL bzw. BHL erhalten, die gebildet sind aus Daten schwachen Gewichts des dritten bzw. des vierten Operanden AH bzw. BH, und einen Eingang (CIN) zur Übertragseingabe, verbunden mit dem zweiten Ausgang des ersten Addierers, um das vom ersten Addierer ausgegebene Übertragsbit (COUT) zu empfangen, und einen ersten, zweiten und dritten Ausgang, um einen Summationsoperanden (SHL) der eingegebenen Operanden AHL und BHL, ein Bit (G1), das die Übertragsgeneration darstellt, bzw. ein Übertragspropagationsbit (P1) der ausgeführten Summe zu liefern;

- einen ersten Übertrags-Zwischenwähler (SES), umfassend drei Eingänge, die mit dem zweiten Ausgang (COUT) des ersten Addierers, dem zweiten Ausgang (G1) des dritten Addierers, bzw. des dritten Ausgangs (P1) des dritten Addierers verbunden sind, wobei der erste Übertragswähler an seinem Ausgang ein Ausgangsübertragsbit $C_1 OUT$ liefert, das der logischen Summe folgt:

$$C_1 OUT = G1 - P1 \cdot COUT$$

- einen vierten Addierer $ADP_{K-2}^{NH-2}$ der Ordnung K-2 und von Niveau NH-2, umfassend Eingänge, die Operanden AHH bzw. BHH erhalten, die gebildet sind aus Daten starken Gewichts des dritten bzw. vierten Operanden, einen Eingang (C2IN) für den Eingangsübertrag, verbunden mit dem Ausgang des ersten Wählers (SES), um ein Ausgangsübertragsbit (C1OUT) dieses Wählers zu erhalten, und einen ersten, zweiten und dritten Ausgang, die einen Summationsoperanden (SHH) der im Eingang empfangenen Operanden (AHH und BHH), ein Bit (G2), das die Übertragsgeneration darstellt, und einen Übertrags-Propagationsoperanden (P2) der ausgeführten Summe liefern;

- einen zweiten Zwischenwähler (SEC) für die Übertragsgeneration, umfassend drei Eingänge, die verbunden sind mit dem zweiten Ausgang (G1) für die Übertragsgeneration des dritten Addierers, dem zweiten Ausgang (G2) für die Übertragsgeneration des vierten Addierers, bzw. den dritten Ausgang (P2) für die Übertragspropagation des vierten Addierers, wobei der zweite Wähler an einem Ausgang, der dem dritten Ausgang des zweiten Addierers entspricht, daß Übertragsgenerationsbit (G) des zweiten Addierers liefert, welches aus der logischen Summe entsteht:

$$G = G2 + P2 \cdot G1$$

- ein logisches "UND"-Gatter mit zwei Eingängen, die mit dem dritten Propagationsausgang (P2) des vierten Addierers, bzw. dem dritten Propagationsausgang (P1) des dritten Addierers verbunden sind, wobei dieses logische Gatter über einen dem zweiten Ausgang des zweiten Addierers entsprechenden Ausgang das Ausgangs-Propagationsbit P des zweiten Addierers liefert, welches aus der logischen Multiplikation

$$P = P1 \cdot P2 \text{ folgt.}$$

3. Addierer nach Anspruch 2, dadurch **gekennzeichnet**, daß der Addierer $ADP_K^1$ der Ordnung K und von Niveau 1, rekursiv vom Addierer $ADP_{K-1}^{NH-1}$ der Ordnung K-1 und von Niveau NH-1 ausgehend erhalten und geeignet zum paarweisen Addieren von bits aus Datenabschnitten $a_i$, $a_{i+1}$, ..., $a_{i+j}$, $a_{i+K}$, und $b_i$, $b_{i+1}$, ..., $b_{i+j}$, $b_{i+K}$ der beiden Operanden A und B (wobei i zwischen 1 und n), umfaßt:

- eine Folge von mindestens K Additions-Elementarzellen vom Typ "Vollständige Addierer", wobei jede Zelle ($FA_{i+j}$) vom Rang i-j zwei Eingänge umfaßt, um ein Bitpaar wie ($a_{i+j}$, $b_{i+j}$) zu erhalten, einen Eingangsübertragseingang, um ein Ausgangsübertragsbit ($r_{i+j-1}$) zu erhalten, welches von einem ersten Übertragsausgang einer vorgeschalteten Zellelementarzelle $FA_{i+j-i}$ der entsprechenden Folge erhalten wird, wobei der Eingangsübertrags-Eingang der ersten Elementarzellen der betreffenden Folge ein Bit vom Wert 0 erhält und der Ausgangsübertrags-Ausgang der letzten Elementarzelle der betreffenden Folge ein Übertragsgenerationsbit (G) für die betreffende Folge liefert, wobei jede Elementarzelle ($FA_{i+j}$) außerdem einen zweiten und einen dritten Ausgang umfaßt, die ein lokales Summationsbit $S_{i+j}$ bzw. ein Propagationsbit $p_{i+j}$ liefern, wobei sich die Bits $r_{i+j}$, $S_{i+j}$ und $P_{i+j}$ aus den logischen Operationen ergeben:

$$r_{i+j} = (r_{i+j-1} \cdot p_{i+j}) + (a_{i+j} \cdot b_{i+j})$$
$$P_{i+j} = a_{i+j} \oplus b_{i+j}$$
$$S_{i+j} = a_{i+j} \oplus b_{i+j} \oplus r_{i+j-1}$$

wobei $\cdot$ der "UND"-Operator ist, + der Operator "INKLUSIVES ODER" ist und $\oplus$ der Operator "EXCLUSIVES ODER" ist;

- eine logische Baugruppe (CP) zum Berechnen der Übertragspropagation P des Addierers, umfassend Eingange, die jeweils mit dem dritten Propagationsausgängen ($p_{i+j}$) der Elementarzellen verbunden sind, um über einen Ausgang ein Propagationsbit $p_{i+K}$ für den Addierer $ADP_K^1$ zu liefern, das sich aus der logischen Operation ergibt:

$$P_{i+k} = p_{i+k} \cdot p_{i+k-1} \cdot \cdots \cdot P_{i+1} \cdot P_i$$

oder

$$P_{i+k} = P_{i+k-1} \cdot p_{i+k}$$

- eine logische Baugruppe (CS) zur Summationsberechnung, umfassend Eingänge, die mit zweiten Summationsausgängen der Elementarzellen bzw. Propagationsausgängen $P_{i+j}$ der Propagationsbaugruppe (CP) verbunden sind, die bits $P_{i+j} = P_{i+j-1} \cdot p_{i+j}$ liefern, und einen Eingangsübertrags-Eingang CIN, verbunden mit dem Ausgangsübertrags-Ausgang des vorgeschalteten Addierers, wobei diese Summationsberechnungsgruppe (CS) über Ausgange Summationsoperanden $S_i$, ..., $S_{i+j}$, ..., bzw. $S_{i+K}$ liefert, die vom Addierer $ADP_K^1$ berechnet werden und Ergebnis der folgenden logischen Operation sind:

$$S_{i+j} = S_{i+j} + (P_{i+j-1} \cdot CIN)$$

mit
$$P_{i-1} = 1$$

4. Addierer nach Anspruch 3, dadurch **gekennzeichnet**, daß der Addierer $AD_K^1$ der Ordnung K und von Niveau 1 wie ein Addierer $ADP_K^1$ der Ordnung K und von Niveau 1 aufgebaut ist, dessen Eingangsübertrags-Eingang (CIN) ein Bit (CIN) erhält, das gleich 0 ist.

FIG. 1

FIG. 2

FIG. 3

FIG. 4